# FASCICULE DE BREVET EUROPEEN

(11) **EP 2 312 721 B1**
(45) Date de publication et mention de la délivrance du brevet: **23.05.2018**
(21) Numéro de dépôt: 10183215.2
(22) Date de dépôt: 30.09.2010
(51) Int. Cl.: H02J 4/00, B64C 25/24

(54) **RÉSEAU DE PILOTAGE POUR ACTIONNEURS MONO OU MULTIMOTEURS, PARTICULIÈREMENT ADAPTÉ À DES APPLICATIONS AÉRONAUTIQUES TELLES QUE L'ALIMENTATION DE MOTEURS DE BOÎTIERS D'ACCROCHAGE.**
STEUERNETZ FÜR MONO ODER MULTI-MOTOR-SCHALTER, BESONDERS FÜR LUFTFAHRTANWENDUNGEN, WIE DIE STROMVERSORGUNG FÜR MOTOREN VON VERRIEGELUNGANORDNUNGEN
NETWORK FOR MANAGING MONO OR MULTI-ENGINE ACTUATORS, PARTICULARLY ADAPTED FOR AERONAUTICAL APPLICATIONS, SUCH AS THE POWER SUPPLY FOR THE MOTORS OF LATCHING BOXES

(30) Priorité: 13.10.2009 FR 0904895
(43) Date de publication de la demande: 20.04.2011
(73) Titulaire: Safran Landing Systems, 78140 Vélizy-Villacoublay (FR)
(72) Inventeur: Nierlich, Florent, 92250 Lagarenne-Colombes (FR); Annee, Etienne, 92400 Courbevoie (FR); Leynaert, François-Noël, 95160 Montmorency (FR)
(74) Mandataire: Parzy, Benjamin Alain

(56) Documents cités:
- US-A- 4 645 940
- US-A- 4 927 329
- US-A- 5 670 856
- US-B2- 7 482 709

## Description

L'invention concerne un réseau de pilotage pour actionneurs mono ou multimoteurs, particulièrement adapté à des applications aéronautiques telles que l'alimentation de moteurs de boîtiers d'accrochage.

### ARRIERE-PLAN TECHNOLOGIQUE DE L'INVENTION

La mise en oeuvre d'atterrisseurs recourt de plus en plus à des actionneurs électriques. Parmi eux, on trouve des actionneurs de manoeuvre des atterrisseurs et des trappes de soute, des boîtiers d'accrochage actionnés électriquement.

Les boîtiers d'accrochage sont en général équipés de deux types d'actionneurs, dont un actionneur principal et un actionneur de secours au cas où le premier actionneur serait défaillant. En effet, il importe de pouvoir libérer l'atterrisseur retenu par le crochet de verrouillage, même en cas de défaillance de l'actionneur principal.

Dans les architectures dans lesquelles l'actionnement de secours est assuré par un actionneur électromécanique, il convient d'assurer l'alimentation de l'actionneur de secours. Or il peut survenir des circonstances dans lesquels les réseaux d'alimentation électrique principaux de l'aéronef, ne sont pas en mesure d'assure l'alimentation des actionneurs de secours (par exemple une panne totale des moteurs de l'aéronef). Il convient alors d'assurer l'alimentation des actionneurs de secours, même dans ces circonstances.

Le document D4 (US4645940) décrit un réseau de puissance, comportant un réseau principal et un réseau de secours, destiné à alimenter une charge à ce réseau. Le réseau comporte un bus de puissance adapté à une puissance alternative générée par au moins un convertisseur continu/alternatif alimenté par une source de tension continue de l'aéronef.

### OBJET DE L'INVENTION

L'invention a pour objet de proposer une alimentation de ce type d'actionneur, à la fois simple et légère.

### BREVE DESCRIPTION DE L'INVENTION

En vue de la réalisation de ce but, on propose un dispositif selon la revendication 1. Ainsi, il reste possible d'alimenter les actionneurs de secours avec de la puissance alternative triphasée et d'assurer un minimum de contrôle de leur action grâce aux moyens de modulation, même en cas de défaillance des réseaux d'alimentation principaux de l'aéronef.

Ainsi, pour des actionneurs ne nécessitant pas un contrôle précis en position, il est néanmoins possible de piloter ces actionneurs par l'intermédiaire d'un profil de tension et/ou de fréquence imposé directement par le convertisseur. Les moteurs sont ainsi commandés en boucle ouverte. Bien entendu, tous les moteurs reliés à ce réseau sont commandés simultanément, ce qui est par exemple le cas des moteurs des crochets de verrouillage.

Ce type d'alimentation est particulièrement adapté pour alimenter des actionneurs de secours, venant prendre la relève d'actionneurs principaux défaillants.

Le convertisseur peut être réalisé très simplement au moyen d'un simple amplificateur linéaire en se passant des éléments de filtrage lourds et encombrants nécessaire dans le cas des commandes à découpage équipant les réseaux de puissance traditionnels.

Bien sûr, une telle configuration conduit à des pertes ou des perturbations plus importantes, mais qui restent acceptables puisque ces pertes ou perturbations ne surviennent que lors de l'utilisation des moteurs ou des actionneurs de secours, soit de façon très occasionnelle.

En pratique, la source de tension continue à partir de laquelle le convertisseur génère la puissance triphasée pourra être constituée de batteries de l'aéronef, ou encore une source de tension continue alimentée par l'unité de puissance auxiliaire de l'aéronef.

### BREVE DESCRIPTION DES FIGURES

L'invention sera mieux comprise à la lumière de la description qui suit des figures des dessins annexés, parmi lesquelles :
- la figure 1 est un schéma d'alimentation d'actionneurs de boîtiers d'accrochage d'atterrisseur, selon une mise en oeuvre particulière de l'invention ;
- la figure 2 est un schéma de réalisation d'un convertisseur utilisable pour le réseau de puissance secours de l'invention ;
- la figure 3 est un schéma d'alimentation d'actionneurs de freinage équipant des freins électriques, selon une autre mise en oeuvre particulière de l'invention ;
- la figure 4 est un schéma d'un actionneur électromécanique de frein.

### DESCRIPTION DETAILLEE DES FIGURES

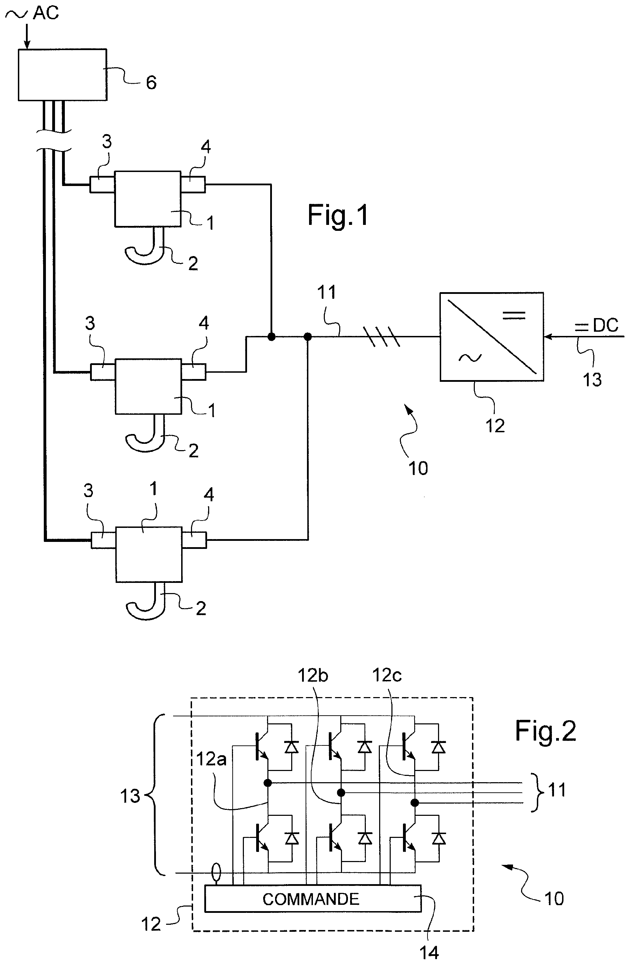

Sur la figure 1 sont représentés de façon schématique trois boîtiers d'accrochage 1 destinés à retenir en position relevée les deux atterrisseurs principaux et l'atterrisseur auxiliaire. De façon connue en soit, les boîtiers d'accrochage sont pourvus de crochets 2 qui sont normalement ouverts, et qui se referment sur une olive solidaire de l'atterrisseur associé lorsque celui-ci arrive en position relevée pour le retenir dans cette position. Le crochet est alors automatiquement verrouillé par un mécanisme à ressort.

Les boîtiers d'accrochage 1 sont pourvus d'au moins un actionneur de déverrouillage principal 3, et d'un actionneur de déverrouillage secours 4, qui permet le déverrouillage du crochet et donc la libération de l'atterrisseur associé en cas de défaillance de l'actionneur de déverrouillage principal 3. Ici, les actionneurs de déverrouillage 3,4 sont des actionneurs électromécaniques. Selon la technologie du boîtier d'accrochage, les actionneurs peuvent être de type rotatif et faire pivoter une came, ou être de type linéaire et agir sur un levier.

Les actionneurs de déverrouillage principaux 3 sont ici alimentés par des câbles reliés à un contrôleur de manoeuvre 6 des atterrisseurs. Celui-ci contient une logique pour alimenter en séquence les différents actionneurs participant à la manoeuvre des atterrisseurs, tels que les boîtiers d'accrochage, les actionneurs de manoeuvre des trappes, les actionneurs de manoeuvre des atterrisseurs. A cet effet, le contrôleur de manoeuvre 6 est relié par au moins un réseau d'alimentation à une source de puissance principale de l'aéronef, en pratique un générateur entraîné par les moteurs de l'aéronef et fournissant un courant à tension constante mais fréquence variable. Tout ceci est bien connu et n'est rappelé que pour mémoire.

Selon l'invention, les actionneurs de déverrouillage de secours 4 sont alimentés par un réseau triphasé de puissance de secours 10 comprenant un bus de puissance triphasé 11 qui distribue aux actionneurs de déverrouillage de secours 4 une tension alternative générée par un convertisseur 12 à partir d'une source de tension continue 13 de l'aéronef. Ici, tous les actionneurs sont reliés au bus de puissance 11.

Comme cela est visible à la figure 2, le convertisseur 12 est ici un simple amplificateur linéaire comportant trois bras 12a, 12b, 12c portant chacun deux interrupteurs commandés par un organe de commande 14. Le convertisseur délivre une puissance triphasée sur le bus de puissance 11, propre à alimenter directement les actionneurs de secours 12.

Le réseau de puissance de secours 10 de l'invention est donc particulièrement simple et est idéalement utilisé pour alimenter des moteurs à commande simple, ne nécessitant pas d'asservissement en position ou en vitesse.

L'organe de commande 14 est avantageusement doté de moyens de modulation commandés pour faire varier la tension et/ou la fréquence du courant alternatif délivré sur le bus de puissance 11. Ainsi, il devient possible de doser la puissance envoyée aux actionneurs de secours 4 et ainsi contrôler la course des actionneurs, ou encore le temps mis par les actionneurs pour déverrouiller les boîtiers. En particulier, il est avantageux d'asservir la fréquence, la tension ou le courant en fonction des besoins des actionneurs branchés sur le réseau de pilotage.

Dans l'application illustrée ici, il peut être avantageux d'alimenter les actionneurs de secours avec une puissance assez importante au moins au début du déverrouillage, pour briser un éventuel dépôt de glace qui a pu se former au niveau du crochet. Puis, lorsque la résistance de l'actionneur diminue brusquement, il est intéressant de diminuer la puissance transmise à l'actionneur de secours pour éviter une surconsommation inutile. Ce dosage peut être réalisé grâce aux moyens de modulation de l'organe de commande du convertisseur 12.

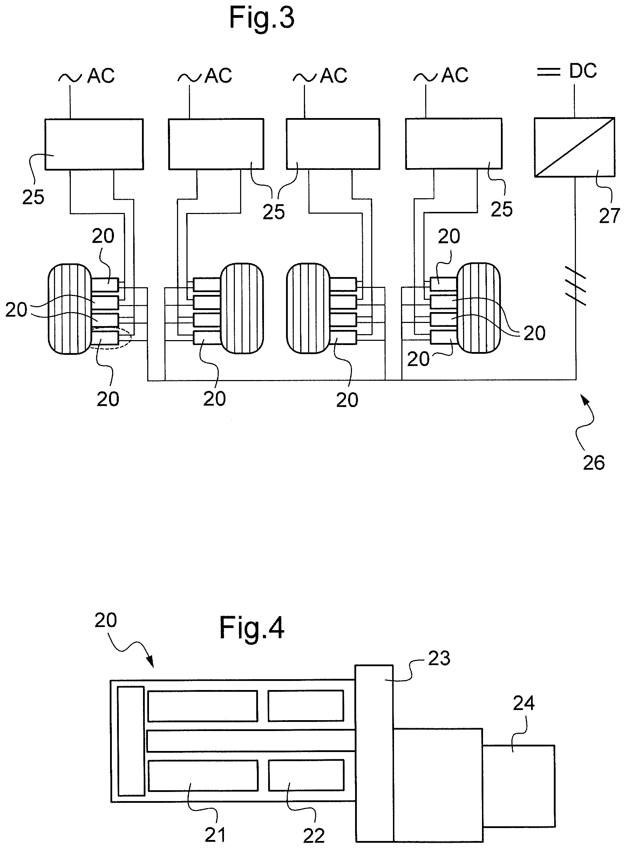

Selon une deuxième application du réseau de puissance de secours de l'invention illustré à la figure 3, celui-ci est utilisé non pour alimenter des actionneurs secours indépendants des actionneurs principaux, mais pour alimenter un deuxième moteur d'un même actionneur, dont le premier moteur est alimenté par un réseau de puissance principal de l'aéronef.

En l'occurrence, ici, l'application concerne l'alimentation d'actionneurs électromécaniques de freinage 20 qui, comme cela est illustré à la figure 4, comportent ici un moteur principal 21 et un moteur de secours 22 montés ici pour entraîner un même arbre qui attaque un réducteur 23 entraînant un poussoir 24 pour appliquer de façon sélective un effort de freinage sur des disques de frein.

Les moteurs principaux 21 sont de façon connue en soi alimentés par des contrôleurs 25 qui distribuent aux moteurs principaux 21 une puissance calibrée en fonction d'ordres de freinage issus d'un calculateur de freinage.

Les moteurs de secours 22 sont ici alimentés par un réseau de puissance de secours 26 selon l'invention, totalement indépendant des contrôleurs 25, et qui comporte un bus de puissance triphasé 28 pour distribuer une puissance triphasée alternative permettant d'alimenter les moteurs de secours 22 des actionneurs de freinage 20.

De la même façon qu'auparavant, la puissance alternative triphasée est générée par un convertisseur 27 très simple qui convertit une puissance continue en puissance alternative triphasée, le convertisseur étant équipé de moyens de modulation permettant de moduler la tension ou la fréquence pour faire varier de façon commandée l'effort de freinage appliqué par les actionneurs sous l'action des moteurs de secours 23. Bien sûr, tous les moteurs de secours reliés au réseau de puissance de secours 26 sont commandés simultanément de sorte que tous les actionneurs travaillent simultanément sous la même puissance.

On pourra bien sûr apporter diverses variantes, sans sortir du cadre de l'invention. Par exemple, les actionneurs reliés au réseau de puissance de secours de l'invention pourront être reliés en série plutôt qu'en parallèle. On pourra également utiliser d'autres technologies pour la réalisation du convertisseur, par exemple un onduleur de type MLI, ou encore un onduleur pleine onde. Il conviendra d'utiliser une technologie simple, même si cette technologie est susceptible de générer des pertes ou des perturbations. En effet ces pertes et ces perturbations restent acceptables dans la mesure où les actionneurs alimentés ne fonctionnent que de façon occasionnelle, pour des périodes de fonctionnement courtes (typiquement quelques secondes).

On notera en outre que dans les deux modes de mise en oeuvre envisagés (duplication d'actionneurs, ou duplication de moteurs au sein d'un même actionneur), une ségrégation totale est observée entre l'alimentation des actionneurs ou moteurs principaux d'une part, et l'alimentation des actionneurs ou moteurs de secours d'autre part. Ainsi, la puissance délivrée par le réseau de puissance de secours ne risque pas de venir polluer le réseau de puissance principal. On peut ainsi se passer d'éléments de filtrage lourds et encombrants, ce qui simplifie encore plus la réalisation du convertisseur.

## Revendications

1. Aéronef équipé :
- d'équipements comportant chacun au moins un moteur ou actionneur principal (3) et au moins un moteur ou actionneur de secours (4) ;
- d'un réseau de puissance principal délivrant une puissance alternative triphasée auquel les moteurs ou actionneurs principaux (3) sont reliés ;
- d'un réseau de puissance de secours (10), distinct du réseau de puissance principal, auquel les moteurs ou actionneurs de secours (4) sont reliés, et comportant un bus de puissance (11 ; 28) adapté à convoyer une puissance alternative triphasée générée par au moins un convertisseur(12) continu/alternatif (12 ; 27) alimenté par une source de tension continue (13) de l'aéronef, le convertisseur étant équipé de moyens de modulation de la tension et/ou de la fréquence de la puissance triphasée ainsi générée, de sorte à doser la puissance envoyée simultanément à tous les moteurs ou actionneurs de secours (4) par le réseau de puissance de secours.

2. Aéronef selon la revendication 1, dans lequel le convertisseur est du type à amplification linéaire.

3. Aéronef selon la revendication 2, dans lequel le convertisseur ne comporte pas d'élément de filtrage.

4. Aéronef selon la revendication 1, dans lequel les moteurs ou actionneurs de secours sont commandés en boucle ouverte par commande des moyens de modulation.

5. Aéronef selon la revendication 1, dans lequel les moyens de modulation sont commandés pour fournir aux moteurs ou actionneurs de secours dans un premier temps une puissance donnée, puis diminuer dans un deuxième temps la puissance fournie.

## Patentansprüche

1. Luftfahrzeug, das ausgestattet ist:
- mit Geräten, die jeweils mindestens einen Hauptmotor oder -aktor (3) und mindestens einen Hilfsmotor oder -aktor (4) umfassen;
- mit einem Hauptleistungsnetz, das eine dreiphasige Wechselleistung liefert und mit dem die Hauptmotoren oder -aktoren (3) verbunden sind;
- mit einem Hilfsleistungsnetz (10), das von dem Hauptleistungsnetz verschieden ist und mit dem die Hilfsmotoren oder -aktoren (4) verbunden sind, und das einen Leistungsbus (11; 28) umfasst, der geeignet ist, eine dreiphasige Wechselleistung zu befördern, die von mindestens einem Gleichstrom-Wechselstromumrichter (12; 27) erzeugt wird, der von einer Gleichspannungsquelle (13) des Luftfahrzeugs gespeist wird, wobei der Umrichter mit Mitteln zur Modulation der Spannung und/oder der Frequenz der so erzeugten dreiphasigen Leistung ausgestattet ist, so dass die Leistung, die allen Hilfsmotoren oder -aktoren (4) durch das Hilfsleistungsnetz gleichzeitig geschickt wird, dosiert wird.

2. Luftfahrzeug nach Anspruch 1, bei dem der Umrichter der Art mit linearer Verstärkung ist.

3. Luftfahrzeug nach Anspruch 2, bei dem der Umrichter kein Filterelement umfasst.

4. Luftfahrzeug nach Anspruch 1, bei dem die Hilfsmotoren oder -aktoren durch Steuerung der Modulationsmittel im offenen Regelkreis gesteuert werden.

5. Luftfahrzeug nach Anspruch 1, bei dem die Modulationsmittel gesteuert werden, um den Hilfsmotoren oder -aktoren in einer ersten Zeitspanne eine gegebene Leistung zu liefern und daraufhin in einer zweiten Zeitspanne die gelieferte Leistung zu reduzieren.

## Claims

1. An aircraft fitted with:
• pieces of equipment, each having at least one main motor or actuator (3) and at least one emergency motor or actuator (4);
• a main power network delivering three-phase AC power and to which the main motors or actuators (3) are connected; and
• an emergency power network (10), distinct from the main power network, to which the emergency motors or actuators (4) are connected, and including a power bus (11; 28) adapted to convey three-phase AC power generated by at least one DC/AC converter (12; 27) powered by a DC voltage source (13) of the aircraft, the converter being fitted with modulator means for modulating the voltage and/or the frequency of the three-phase power as generated in this way so as to meter the power sent simultaneously to all of the emergency motors or actuators (4) by the emergency power network.

2. An aircraft according to claim 1, wherein the converter is of the linear amplification type.

3. An aircraft according to claim 2, wherein the converter does not include a filter element.

4. An aircraft according to claim 1, wherein the emergency motors or actuators are subjected to open-loop control under the control of the modulator means.

5. An aircraft according to claim 1, wherein the modulator means are controlled initially to deliver a given power to the emergency motors or actuators, and then subsequently to reduce the power delivered.
